# FASCICULE DE BREVET EUROPEEN

(11) **EP 2 417 169 B1**
(45) Date de publication et mention de la délivrance du brevet: **23.09.2015**
(21) Numéro de dépôt: 10723238.1
(22) Date de dépôt: 09.04.2010
(51) Int. Cl.: C08F 214/18

(54) **PROCEDE DE FABRICATION DE TERPOLYMERES A BASE DE VDF,TRFE, ET CFE OU CTFE**
VERFAHREN ZUR HERSTELLUNG VON TERPOLYMEREN AUF BASIS CON VDF, TRFE UND CFE ODER CTFE
METHOD FOR THE PRODUCTION OF TERPOLYMERS BASED ON VDF, TRFE AND CFE, OR CTFE

(30) Priorité: 09.04.2009 FR 0901751
(43) Date de publication de la demande: 15.02.2012
(73) Titulaire: Piezotech, 69310 Pierre-Bénite (FR)
(72) Inventeur: BAUER, François, F-68300 Saint Louis (FR)
(74) Mandataire: Albani, Dalila
(86) Numéro de dépôt international: PCT/FR2010/050688
(87) Numéro de publication internationale: WO 2010/116105

(56) Documents cités:
- EP-A- 0 391 421
- EP-A- 1 748 053
- F. BAUER, E. FOUSSON, Q.M. ZHANG, L.M. LEE: IEEE TRANSACTIONS ON DIELECTRICS AND ELECTRICAL INSULATION, vol. 11, no. 2, 2004, pages 293-298, XP002376851

## Description

La présente invention concerne un procédé de fabrication de terpolymères par polymérisation de monomères de VDF (difluorure de vinylidène), de TrFE (trifluoroéthylène) et de CFE (chlorofluoro 1,1, ethylène) ou de CTFE (chlorotrifluoroéthylène), en présence d'un initiateur de polymérisation radicalaire.

Les terpolymères obtenus par ce procédé présentent la particularité d'être relaxeurs et de posséder des propriétés électrostrictives. Ils peuvent par conséquent être utilisés pour la réalisation de systèmes actuateurs, de micro-pompes ou de condensateurs.

Ils présentent par ailleurs une transition de phase diffuse, un cycle d'hystérésis très aminci, une forte constante diélectrique à température ambiante et une déformation relativement élevée.

Ces polymères doivent présenter une constante diélectrique au moins égale à 50, à température ambiante, une polarisation induite sous champ électrique élevée d'au moins 0,1 C/m², une bonne tenue électrique se traduisant par une valeur de champ électrique de claquage supérieure à 400 MV/m, ce qui conduit à une forte densité d'énergie électrique de stockage s'élevant à au moins à 10 J/cm³ sous 350 MV/m, une déformation longitudinale électrique pouvant atteindre 7 % à 170 MV/m.

Des copolymères de ce type ont été fabriqués selon le procédé décrit dans le document EP 1.748.053. Ce procédé est mis en oeuvre dans un autoclave et en présence d'un initiateur pour initier la réaction de polymérisation entre les monomères.

Le procédé décrit dans le document ci-dessus concerne ainsi la fabrication de copolymères comprenant au moins trois monomères dont le difluorure de vinylidène (VDF) et le trifluoroéthylène (TrFE) associés à au moins un autre monomère plus réactif que ces derniers.

Ce procédé comprend les étapes suivantes :
a) chargement d'un mélange des trois monomères constitutifs dans un volume réactionnel prédéfini, ledit mélange étant pauvre en monomère réactif,
b) dès que la réaction est initiée, réinjection de façon continue et à pression constante d'un mélange des monomères constitutifs, plus riche en monomère le plus réactif, la composition dudit mélange étant déterminée de manière connue par calcul.

Les essais effectués par la demanderesse ont permis de constater que ce procédé présentait un certain nombre d'inconvénients.

En effet, il a été constaté que les copolymères obtenus avaient des propriétés qui étaient parfois non reproductibles, car la réinjection effectuée dans la seconde étape du procédé n'était faite qu'après l'initiation de la réaction de polymérisation. Or, il a été constaté que la durée de la phase d'initiation de la réaction était souvent imprécise, voire aléatoire.

De plus, il a été constaté que la présence dans le mélange de la charge initiale, d'un monomère plus réactif que les autres monomères, tel que le CFE, tendait à ralentir la phase d'initiation de la réaction dans le temps.

En outre, il a été constaté que la réalisation de polymérisation selon le procédé ci-dessus conduisait à un fort encrassement du réacteur, avec présence de croûtes et de peaux aussi bien sur les parois du réacteur qu'au sein de la poudre de copolymère obtenue. Ce phénomène est d'autant plus marqué que la température de polymérisation est élevée, ce qui limite les possibilités d'obtenir des polymères ayant des masses moléculaires très élevées. Cet encrassement du réacteur, aussi bien de ses parois qu'au sein de la poudre, est évalué sur une échelle à 4 niveaux numérotés de 0 à 3 et caractérisés comme suit :
▪ Niveau 0 :
   o réacteur propre après vidange et simple rinçage au jet d'eau,
   o résine libre de toute croûte ou peau.
▪ Niveau 1 :
   o présence d'un crépi friable sur une partie mineure des parois du réacteur,
   o crépi ou film léger sur le mobile d'agitation,
   o gaine de température propre,
   o poudre sans ou avec très peu d'agrégats ou pâtons.
▪ Niveau 2 :
   o présence d'un crépi peu friable voire dur sur une majeure partie des parois du réacteur,
   o mobile d'agitation encrassé ou encroûté,
   ∘ film sur la gaine de température,
   ∘ agrégats et morceaux de croûtes dans la poudre
▪ Niveau 3 :
   ∘ présence d'un film épais et résistant sur la majeure partie de la surface du réacteur,
   ∘ mobile d'agitation fortement encroûté,
   ∘ blocs et filaments autour de la gaine de température,
   ∘ présence de nombreuses peaux et croûtes dans la poudre.

En utilisant cette échelle pour évaluer le niveau d'encrassement après polymérisation, on attribue le niveau 1, 2 ou 3 pour les polymérisations faites selon le procédé ci-dessus, alors que le procédé décrit dans la présente permet d'obtenir régulièrement et de manière reproductible le niveau 0.

Le but de la présente invention est de remédier aux inconvénients du procédé connu ci-dessus.

Ce but est atteint, selon l'invention, grâce à un procédé de fabrication de terpolymères par polymérisation en suspension:
- de monomères de VDF (difluorure de vinylidène),
- de monomères de TrFE (trifluoroéthylène), et
- de monomères de CFE (chlorofluoro 1,1, ethylène) ou de CTFE (chlorotrifluoroéthylène)
en présence d'un initiateur de polymérisation radicalaire.

De manière caractéristique, le procédé selon l'invention comprend les étapes suivantes :
i) on charge dans un autoclave un mélange initial de VDF et de TrFE, dépourvu de CFE et de CTFE,
ii) on injecte dans l'autoclave, l'initiateur mélangé avec de l'eau de sorte à atteindre à l'intérieur de l'autoclave une pression au moins égale à 80 bars, pour former une suspension de monomères de VDF et de TrFE dans l'eau,
iii) on injecte dans l'autoclave un mélange secondaire constitué de VDF, de TrFE et de CFE ou de CTFE puis,
iv) dès que la réaction de polymérisation démarre, on réinjecte ledit mélange secondaire en continu dans le réacteur, de sorte à y garder une pression d'au moins 80 bars, constante.

Avantageusement, le mélange initial présente la composition massique suivante :
- une proportion de VDF allant de 25 à 95%, de préférence de 55 à 80%;
- une proportion de TrFE allant de 5 à 75, de préférence de 20 à 45%.

Le mélange secondaire présente la composition massique suivante :
- une proportion de VDF allant de 20 à 80%, de préférence de 35 à 70%;
- une proportion de TrFE allant de 3 à 60, de préférence de 14 à 40%.
- une proportion de CFE ou de CTFE de 4 à 67%, de préférence de 7 à 34%.

Entre le mélange initial et le mélange secondaire il y a un rapport massique allant de 0,4 à 2.

Ce procédé permet d'obtenir des terpolymères dont les propriétés sont plus reproductibles que celles des terpolymères obtenus selon le procédé connu décrit plus haut.

De plus, la mise en oeuvre du procédé est beaucoup plus simple, notamment du fait qu'elle ne dépend pas de la durée de la phase d'initiation de la réaction qui est souvent imprécise, voire aléatoire.

En outre, les terpolymères obtenus, même à haut poids moléculaire, se présentent sous la forme de poudre, dépourvue de peaux ou croûtes.

De préférence, à l'intérieur de l'autoclave la pression est comprise entre 80 et 110 bars et la température est maintenue à une valeur comprise entre 40°C et 60°C.

Le mélange secondaire de VDF, de TrFE et de CFE ou CTFE est réinjecté en continu dans l'autoclave, par exemple à travers une vanne associée à un clapet anti-retour.

Le mélange secondaire ci-dessus, peut être comprimé au moyen de deux compresseurs en série, avant d'être réinjecté dans l'autoclave. De manière connue, le mélange secondaire est injecté dans l'autoclave sous une pression supérieure à celle régnant dans l'autoclave, à savoir à des valeurs au dessus de 80 bars.

Le terpolymère obtenu selon le procédé de l'invention est composé de x% en moles de VDF, de y% en moles de TrFE et de (100-x-y)% en moles de CFE ou de CTFE, où :
- x est compris entre 30 et 80, de préférence entre 40 et 70,
- y est compris entre 5 et 60, de préférence entre 20 et 50,
- et où la somme de x et de y est comprise entre 80 et 97, de préférence entre 90 et 95.

A titre d'exemple, le terpolymère obtenu est composé de 61,8% en moles de VDF, 29,8% en moles de TrFE et de 8,5% en moles de CFE.

Le procédé selon l'invention permet d'obtenir des terpolymères ayant une masse moléculaire moyenne supérieure à 400 000, comme mesurée par viscosimétrie. Les terpolymères selon l'invention sont libres de toute croûte ou peau.

D'autres particularités et avantages de l'invention apparaîtront à la lecture de la description détaillée ci-après.

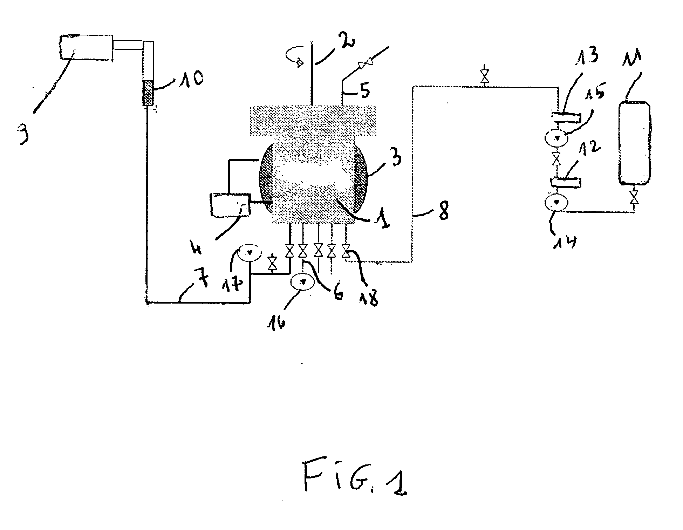

La figure 1 annexée, donnée à titre d'exemple non limitatif, représente schématiquement une installation pour la mise en oeuvre du procédé de fabrication selon l'invention.

Cette installation comprend essentiellement un autoclave 1 équipé d'un agitateur 2, d'une jupe chauffante 3 et d'un thermostat 4. Cet autoclave 1 présente par exemple un volume intérieur de 4 litres. A cet autoclave 1 sont reliées plusieurs tubulures, dont une tubulure de prise de vide 5, une tubulure 6 d'introduction du mélange gazeux initial, une tubulure 7 d'injection de l'initiateur et une tubulure 8 d'injection du mélange gazeux secondaire et de réinjection de ce mélange.

La tubulure 6 est destinée à être raccordée à une bouteille ou deux bouteilles séparées contenant respectivement du VDF et du TrFE sous une pression de l'ordre de 2 à 3 bars.

La tubulure 7 est reliée à une pompe à eau 9 permettant d'injecter dans l'autoclave 1 une quantité dosée d'initiateur 10.

La tubulure 8 est reliée à une bouteille 11 ou plusieurs bouteilles séparées contenant respectivement du VDF, du TrFE et du CFE sous une pression de l'ordre de 2 à 3 bars.

Entre la bouteille 11 et la tubulure 8 sont branchés en série deux compresseurs 12, 13 destinés à comprimer le gaz sortant de la bouteille 11 pour l'injecter ou le réinjecter dans l'autoclave 1.

Par ailleurs, les références 14, 15, 16 et 17 désignent des manomètres pour indiquer la pression.

Le procédé selon l'invention est mis en oeuvre au moyen de l'installation ci-dessus selon un mode opératoire décrit ci-après à titre d'exemple.

### Etape i)

Le mélange initial de VDF et de TrFE est introduit dans l'autoclave 1 par la tubulure 6. Dans un mode de réalisation, cette charge est constituée de 463,34 g de VDF et de 286,66 g de TrFE soit un pourcentage molaire de 67,43% de VDF et de 32,57% de TrFE.

### Etape ii)

L'initiateur 10 est un initiateur radicalaire de la famille des peroxydicarbonates. Il est injecté dans l'autoclave 1 via la tubulure 7.

L'eau introduite dans l'autoclave 1 met l'intérieur de ce dernier sous une pression supérieure à 80 bars et de préférence comprise entre plus de 80 et 100 bars.

Les deux monomères contenus dans l'autoclave 1 atteignent la phase critique et se mettent en suspension dans l'eau.

### Etape iii)

Le mélange secondaire de VDF, de TrFE et de CFE contenu dans la ou les bouteilles 11 est mis en surpression grâce aux deux compresseurs 12, 13 est injecté dans l'autoclave 1 au moyen de la tubulure 8 et d'une vanne 18 équipée d'un clapet anti-retour.

Le mélange secondaire ci-dessus est injecté dans l'autoclave 1 a une pression légèrement supérieure à 80 bars régnant à l'intérieur de l'autoclave 1, de préférence allant de plus de 80 bars à 110 bars.

La composition du mélange secondaire est par exemple égale à 606 g de VDF, 374,92 g de TrFE et 15,46 g de CFE, soit en moles 57,01% de VDF, 27,53% de TrFE et 15,46% de CFE.

La température à l'intérieur de l'autoclave 1 est maintenue à une valeur comprise entre 45 et 52°C.

La réaction de polymérisation entre les trois monomères démarre ensuite. La polymérisation qui a pour effet de transformer les monomères en suspension dans l'eau, en poudre solide, engendre une chute de pression. Cette chute de pression a pour effet de réinjecter automatiquement dans l'autoclave 1, en continu et à pression constante, le mélange des trois monomères contenu dans la ou les bouteilles 11.

Le processus de polymérisation se poursuit ensuite pendant une durée d'environ 5 heures. Pendant cette durée, la pression à l'intérieur de l'autoclave 1 est maintenue à une valeur supérieure à 80 bars et de préférence entre plus de 80 et 100 bars. De même la température est maintenue entre 45 et 52°C.

Le rendement de la conversion des monomères en terpolymère est de l'ordre de 80 à 90%.

Le terpolymère obtenu après lavage et séchage se présente sous forme de poudre blanche dépourvue de peaux.

Le terpolymère obtenu a la composition molaire suivante :
VDF : 61,70%
TrFE : 29,80%
CFE : 8,50%

Sa masse moléculaire moyenne est égale à 413 000. Elle a été mesurée par viscosimétrie à 20°C en utilisant comme solvant la méthyle éthyle cétone.

Cette masse moléculaire peut être supérieure à cette valeur, en réglant la température de l'autoclave a une valeur supérieure à 52°C.

L'exemple ci-dessus peut être répété en remplaçant le CFE par le CTFE.

## Revendications

1. Procédé de fabrication de terpolymères par polymérisation de monomères de VDF (difluorure de vinylidène), de TrFE (trifluoroéthylène), et de CFE (chlorofluoro 1,1, ethylène) ou de CTFE (chlorotrifluoroéthylène) en présence d'un initiateur de polymérisation radicalaire, ledit procédé comprenant les étapes suivantes :
i) on charge dans un autoclave un mélange initial de VDF et de TrFE, dépourvu de CFE et de CTFE,
ii) on injecte dans l'autoclave, l'initiateur mélangé avec de l'eau de sorte à atteindre à l'intérieur de l'autoclave une pression au moins égale à 80 bars, pour former une suspension de monomères de VDF et de TrFE dans l'eau,
iii) on injecte dans l'autoclave un mélange secondaire constitué de VDF, de TrFE et de CFE ou de CTFE puis
iv) dès que la réaction de polymérisation démarre, on réinjecte ledit mélange secondaire en continu dans le réacteur, de sorte à y garder une pression d'au moins 80 bars, constante.

2. Procédé selon la revendication 1, dans lequel le mélange initial présente la composition suivante :
- une proportion de VDF allant de 25 à 95%, de préférence de 55 à 80%;
- une proportion de TrFE allant de 5 à 75, de préférence de 20 à 45%.

3. Procédé selon l'une des revendications 1 ou 2, dans lequel le mélange secondaire présente la composition massique suivante :
- une proportion de VDF allant de 20 à 80%, de préférence de 35 à 70%;
- une proportion de TrFE allant de 3 à 60, de préférence de 14 à 40%.
- une proportion de CFE ou de CTFE de 4 à 67%, de préférence de 7 à 34%.

4. Procédé selon l'une quelconque des revendications 1 à 3, dans lequel la pression à l'intérieur de l'autoclave au cours des étapes ii à iv) est d'au moins 80 bars.

5. Procédé selon l'une quelconque des revendications 1 à 4, dans lequel la température à l'intérieur de l'autoclave est maintenue à une valeur comprise entre 40°C et 60°C.

6. Procédé selon l'une quelconque des revendications 1 à 5, dans lequel le mélange secondaire de VDF, de TrFE et de CFE ou CTFE est.réinjecté en continu dans l'autoclave à travers une vanne associée à un clapet anti-retour.

7. Procédé selon l'une quelconque des revendications 1 à 6, dans lequel le mélange secondaire est comprimé au moyen de deux compresseurs en série, avant d'être réinjecté dans l'autoclave.

8. Procédé selon l'une quelconque des revendications 1 à 7, dans lequel le terpolymère obtenu est composé de x% en moles de VDF, de y% en moles de TrFE et de (100-x-y)% en moles de CFE ou de CTFE, où :
- x est compris entre 30 et 80, de préférence entre 40 et 70,
- y est compris entre 5 et 60, de préférence entre 20 et 50,
- et où la somme de x et de y est comprise entre 80 et 97, de préférence entre 90 et 95..

9. Procédé selon la revendication 8, dans lequel le terpolymère obtenu est composé de 61,8% en moles de VDF, 29,8% en moles de TrFE et de 8,5% en moles de CFE.

10. Procédé selon l'une quelconque des revendications 1 à 9, dans lequel le terpolymère obtenu a une masse moléculaire moyenne supérieure à 400 000.

11. Utilisation d'un terpolymère obtenu selon l'une quelconque des revendications 1 à 10, pour la réalisation de systèmes actuateurs.

12. Utilisation d'un terpolymère obtenu selon l'une quelconque des revendications 1 à 10, pour la fabrication de micro-pompes.

13. Utilisation d'un terpolymère obtenu selon l'une quelconque des revendications 1 à 10, pour la fabrication de condensateurs.

14. Terpolymère obtenu suivant le procédé selon l'une quelconque des revendications 1 10, ledit terpolymère étant composé de x% en moles de VDF, de y% en moles de TrFE et de (100-x-y)% en moles de CFE ou de CTFE, où :
- x est compris entre 30 et 80, de préférence entre 40 et 70,
- y est compris entre 5 et 60, de préférence entre 20 et 50,
- et où la somme de x et de y est comprise entre 80 et 97, de préférence entre 90 et 95, ledit terpolymère étant obtenu sous forme de poudre, libre de croûte ou peau, ledit procédé consistant en la polymérisation de VDF, de TrFE et de CFE ou de CTFE en présence d'un initiateur de polymérisation radicalaire et comprenant les étapes suivantes :
i) on charge dans un autoclave un mélange initial de VDF et de TrFE, dépourvu de CFE et de CTFE,
ii) on injecte dans l'autoclave, l'initiateur mélangé avec de l'eau de sorte à atteindre à l'intérieur de l'autoclave une pression au moins égale à 80 bars, pour former une suspension de monomères de VDF et de TrFE dans l'eau,
iii) on injecte dans l'autoclave un mélange secondaire constitué de VDF, de TrFE et de CFE ou de CTFE puis
iv) dès que la réaction de polymérisation démarre, on réinjecte ledit mélange secondaire en continu dans le réacteur, de sorte à y garder une pression d'au moins 80 bars, constante.

## Patentansprüche

1. Verfahren zur Herstellung von Terpolymeren durch Polymerisation der Monomere VDF (Vinylidendifluorid), TrFE (Trifluorethylen) und CFE (1,1-Chlorfluorethylen) oder CTFE (Chlortrifluorethylen) in Gegenwart eines radikalischen Polymerisationsinitiators, wobei das Verfahren die folgenden Schritte umfasst:
(i) Befüllen eines Autoklaven mit einem Anfangsgemisch aus VDF und TrFE, das kein CFE und CTFE aufweist,
(ii) Injizieren des mit Wasser vermischten Initiators in den Autoklaven so, dass im Innern des Autoklaven ein Druck von wenigstens 80 bar erreicht wird, um eine Suspension der Monomere VDF und TrFE in Wasser zu bilden,
(iii) Injizieren eines Sekundärgemisches, das aus VDF, TrFE und CFE oder CTFE besteht, in den Autoklaven, und anschließend
(iv) kontinuierliches Injizieren des Sekundärgemisches in den Reaktor, sobald die Polymerisationsreaktion in Gang gekommen ist, sodass dort konstant ein Druck von wenigstens 80 bar aufrechterhalten wird.

2. Verfahren nach Anspruch 1, worin das Anfangsgemisch die folgende Zusammensetzung hat:
VDF in einem Anteil im Bereich von 25 bis 95 %, vorzugsweise 55 bis 80 %;
TrFE in einem Anteil im Bereich von 5 bis 75 %, vorzugsweise 20 bis 45 %.

3. Verfahren nach einem der Ansprüche 1 oder 2, worin das Sekundärgemisch die folgende auf das Gewicht bezogene Zusammensetzung aufweist:
VDF in einem Anteil im Bereich von 20 bis 80 %, vorzugsweise 35 bis 70 %;
TrFE in einem Anteil im Bereich von 3 bis 60 %, vorzugsweise 14 bis 40 %;
CFE oder CTFE in einem Anteil im Bereich von 4 bis 67 %, vorzugsweise 7 bis 34 %.

4. Verfahren nach einem der Ansprüche 1 bis 3, worin der Druck im Innern des Autoklaven während der Schritte ii) bis iv) mindestens 80 bar beträgt.

5. Verfahren nach einem der Ansprüche 1 bis 4, worin die Temperatur im Innern des Autoklaven auf einem Wert zwischen 40 und 60°C gehalten wird.

6. Verfahren nach einem der Ansprüche 1 bis 5, worin das Sekundärgemisch aus VDF, TrFE und CFE oder CTFE dem Autoklaven über ein Ventil mit Rückschlagarmatur kontinuierlich zugeführt wird.

7. Verfahren nach einem der Ansprüche 1 bis 6, worin das Sekundärgemisch mit Hilfe von zwei in Reihe geschalteten Kompressoren komprimiert wird, bevor es dem Autoklaven zugeführt wird.

8. Verfahren nach einem der Ansprüche 1 bis 7, worin das erhaltene Terpolymer aus x Mol-% VDF, y Mol-% TrFE und (100-x-y) Mol-% CFE oder CTFE zusammensetzt ist, wobei:
- x zwischen 30 und 80, vorzugsweise zwischen 40 und 70 liegt,
- y zwischen 5 und 60, vorzugsweise zwischen 20 und 50 liegt, und
- wobei die Summe aus x und y zwischen 80 und 97, vorzugsweise zwischen 90 und 95 liegt.

9. Verfahren nach Anspruch 8, worin das erhaltene Terpolymer aus 61,8 Mol-% VDF, 29,8 Mol-% TrFE und 8,5 Mol-% CFE besteht.

10. Verfahren nach einem der Ansprüche 1 bis 9, worin das erhaltene Terpolymer eine mittlere Molmasse über 400.000 aufweist.

11. Verwendung eines nach einem der Ansprüche 1 bis 10 erhaltenen Terpolymers zur Realisierung von Aktorsystemen.

12. Verwendung eines nach einem der Ansprüche 1 bis 10 erhaltenen Terpolymers zur Herstellung von Mikropumpen.

13. Verwendung eines nach einem der Ansprüche 1 bis 10 erhaltenen Terpolymers zur Herstellung von Kondenstatoren.

14. Terpolymer, das gemäß dem Verfahren nach einem der Ansprüche 1 bis 10 erhalten wurde, wobei das erhaltene Terpolymer aus x Mol-% VDF, y Mol-% TrFE und (100-x-y) Mol-% CFE oder CTFE zusammensetzt ist, wobei:
- x zwischen 30 und 80, vorzugsweise zwischen 40 und 70 liegt,
- y zwischen 5 und 60, vorzugsweise zwischen 20 und 50 liegt, und
- wobei die Summe aus x und y zwischen 80 und 97, vorzugsweise zwischen 90 und 95 liegt,
wobei das Terpolymer in Form von Pulver ohne Kruste oder Haut erhalten wird,
wobei das Verfahren in einer Polymerisation von VDF, TrFE und CFE oder CTFE in Gegenwart eines radikalischen Polymerisationsinitiators besteht und die folgenden Schritte umfasst:
(i) Befüllen eines Autoklaven mit einem Anfangsgemisch aus VDF und TrFE, das kein CFE und CTFE aufweist,
(ii) Injizieren des mit Wasser vermischten Initiators in den Autoklaven so, dass im Innern des Autoklaven ein Druck von wenigstens 80 bar erreicht wird, um eine Suspension der Monomere VDF und TrFE in Wasser zu bilden,
(iii) Injizieren eines Sekundärgemisches, das aus VDF, TrFE und CFE oder CTFE besteht, in den Autoklaven, und anschließend
(iv) kontinuierliches Injizieren des Sekundärgemisches in den Reaktor, sobald die Polymerisationsreaktion in Gang gekommen ist, sodass dort konstant ein Druck von wenigstens 80 bar aufrechterhalten wird.

## Claims

1. Process for manufacturing terpolymers by polymerization of VDF (vinylidene difluoride), TrFE (trifluoroethylene), and CFE (1-chloro-1-fluoroethylene) or CTFE (chlorotrifluoroethylene) monomers in the presence of a radical polymerization initiator, said process comprising the following steps:
i) an initial mixture of VDF and of TrFE, free of CFE and of CTFE, is fed into an autoclave,
ii) the initiator mixed with water is injected into the autoclave so as to achieve, inside the autoclave, a pressure at least equal to 80 bar, in order to form a suspension of VDF and TrFE monomers in water,
iii) a secondary mixture constituted of VDF, TrFE and CFE or CTFE is injected into the autoclave, then
iv) as soon as the polymerization reaction starts, said secondary mixture is reinjected continuously into the reactor, so as to maintain therein a constant pressure of at least 80 bar.

2. Process according to Claim 1, in which the initial mixture has the following composition:
- a proportion of VDF ranging from 25% to 95%, preferably from 55% to 80%;
- a proportion of TrFE ranging from 5% to 75%, preferably from 20% to 45%.

3. Process according to either of Claims 1 and 2, in which the secondary mixture has the following composition by weight:
- a proportion of VDF ranging from 20% to 80%, preferably from 35% to 70%;
- a proportion of TrFE ranging from 3% to 60%, preferably from 14% to 40%;
- a proportion of CFE or of CTFE from 4% to 67%, preferably from 7% to 34%.

4. Process according to any one of Claims 1 to 3, in which the pressure inside the autoclave during steps ii) to iv) is at least 80 bar.

5. Process according to any one of Claims 1 to 4, in which the temperature inside the autoclave is maintained at a value between 40°C and 60°C.

6. Process according to any one of Claims 1 to 5, in which the secondary mixture of VDF, TrFE and CFE or CTFE is reinjected continuously into the autoclave through a gate associated with a non-return valve.

7. Process according to any one of Claims 1 to 6, in which the secondary mixture is compressed using two compressors in series, before being reinjected into the autoclave.

8. Process according to any one of Claims 1 to 7, in which the terpolymer obtained is composed of x mol% of VDF, y mol% of TrFE and (100-x-y) mol% of CFE or CTFE, where:
- x is between 30 and 80, preferably between 40 and 70,
- y is between 5 and 60, preferably between 20 and 50,
- and where the sum of x and y is between 80 and 97, preferably between 90 and 95.

9. Process according to Claim 8, in which the terpolymer obtained is composed of 61.8 mol% of VDF, 29.8 mol% of TrFE and 8.5 mol% of CFE.

10. Process according to any one of Claims 1 to 9, in which the terpolymer obtained has an average molecular weight of greater than 400 000.

11. Use of a terpolymer obtained according to any one of Claims 1 to 10, for producing actuator systems.

12. Use of a terpolymer obtained according to any one of Claims 1 to 10, for manufacturing micropumps.

13. Use of a terpolymer obtained according to any one of Claims 1 to 10, for manufacturing capacitors.

14. Terpolymer obtained following the process according to any one of Claims 1 to 10, said terpolymer being composed of x mol% of VDF, y mol% of TrFE and (100-x-y) mol% of CFE or CTFE, where:
- x is between 30 and 80, preferably between 40 and 70,
- y is between 5 and 60, preferably between 20 and 50,
- and where the sum of x and y is between 80 and 97, preferably between 90 and 95,
said terpolymer being obtained in the form of powder, free of crust or skin, said process consisting of the polymerization of VDF, TrFE and CFE or CTFE, in the presence of a radical polymerization initiator and comprising the following steps:
i) an initial mixture of VDF and of TrFE, free of CFE and of CTFE, is fed into an autoclave,
ii) the initiator mixed with water is injected into the autoclave so as to achieve, inside the autoclave, a pressure at least equal to 80 bar, in order to form a suspension of VDF and TrFE monomers in water,
iii) a secondary mixture constituted of VDF, TrFE and CFE or CTFE is injected into the autoclave, then
iv) as soon as the polymerization reaction starts, said secondary mixture is reinjected continuously into the reactor, so as to maintain therein a constant pressure of at least 80 bar.
